# FASCICULE DE BREVET EUROPEEN

(11) **EP 0 965 506 B1**
(45) Date de publication et mention de la délivrance du brevet: **26.10.2005**
(21) Numéro de dépôt: 99401424.9
(22) Date de dépôt: 11.06.1999
(51) Int. Cl.: B60T 7/06

(54) **Dispositif de montage d'une pédale d'un véhicule automobile**
Vorrichtung zur Montage eines Pedals für ein Fahrzeug
Device for mounting a pedal on a vehicle

(30) Priorité: 17.06.1998 FR 9807641
(43) Date de publication de la demande: 22.12.1999
(73) Titulaire: Renault s.a.s., 92100 Boulogne Billancourt (FR)
(72) Inventeur: Didiez, Lionel, 91160 Saulx les Chartreux (FR); Rouvière, Gérard, 95740 Frepillon (FR); Flores, Roger, 92350 Le Plessis Robinson (FR); Vidal, Jean-Marc, 78230 Le Pecq (FR)

(56) Documents cités:
- DE-A- 19 627 775

## Description

La présente invention concerne un dispositif de montage d'une pédale, en particulier d'une pédale de frein ou de débrayage, d'un véhicule automobile.

Lorsqu'un véhicule automobile subit un accident par un choc de sa partie avant contre un obstacle, notamment un choc frontal ou orienté vers l'arrière, le chauffeur, qui en général appuie fortement sur la pédale du frein au moment du choc, subit des lésions physiologiques notamment dans sa cheville.

Pour éviter ou limiter ces blessures du chauffeur, une solution connue consiste à libérer les extrémités de l'axe de la pédale lors de la déformation des flasques de la chape portant cet axe. Une autre solution propose une rupture de la chape pour libérer sa partie portant la pédale par l'intermédiaire de l'axe.

Aucune des solutions ci-dessus n'est vraiment satisfaisante. En effet, le dimensionnement des pédales et de leurs supports pour qu'ils résistent aux efforts de service, de freinage ou de débrayage, est souvent incompatible avec un effacement de ces mêmes pédales sous le pied du chauffeur sous un effort faible, inférieur aux seuils de blessures physiologiques du chauffeur lors d'un choc.

Le but de la présente invention est de proposer un dispositif de montage d'une pédale permettant d'accroître la sécurité du chauffeur d'un véhicule automobile de façon à limiter les risques de lésions notamment dans ses membres inférieurs, en particulier dans ses chevilles.

Le dispositif de montage d'une pédale, en particulier d'une pédale de frein, d'un véhicule automobile, dans lequel la pédale est montée sur un support par l'intermédiaire d'un axe principal de rotation, comprend, selon l'invention, des moyens de cisaillage reliés à une partie fixe du véhicule et permettant de cisailler radialement ledit axe principal en cas de déplacement dudit support par rapport à ladite partie fixe de façon à libérer la pédale dudit support.

Selon l'invention, ledit axe principal est de préférence porté par ledit support de part et d'autre d'un moyeu de la pédale, des moyens de cisaillage étant prévus de part et d'autre de ce moyeu.

Selon l'invention, lesdits moyens de cisaillage comprennent de préférence au moins un couteau et des moyens pour déplacer ce couteau par rapport audit axe principal pour cisailler ce dernier en cas de déplacement dudit support par rapport à ladite partie fixe.

Selon l'invention, ledit couteau comprend de préférence deux branches coupantes en forme de V, ledit axe principal étant disposé entre les branches de ce couteau.

Selon l'invention, ledit couteau comprend de préférence une partie butant contre ladite partie fixe, en cas de déplacement dudit support par rapport à ladite partie fixe.

Selon l'invention, ledit couteau est de préférence porté par ledit support par l'intermédiaire d'un axe secondaire, ledit support présentant une partie venant en appui sur ladite partie fixe, de telle sorte que ledit couteau peut de préférence tourner autour dudit axe transversal en prenant appui sur ladite partie fixe de manière à cisailler radialement ledit axe transversal en cas de déplacement dudit support par rapport à ladite partie fixe.

La présente invention sera mieux comprise à l'étude de dispositifs de montage d'une pédale d'un véhicule automobile, décrits à titre d'exemples non limitatifs et illustrés par le dessin sur lequel :
- la figure 1 représente une vue latérale schématique d'un premier dispositif de montage d'une pédale d'un véhicule automobile selon la présente invention ;
- la figure 2 représente une coupe sensiblement horizontale d'une partie du dispositif de montage de la figure 1 ;
- et la figure 3 représente une vue schématique d'un second dispositif de montage d'une pédale d'un véhicule automobile selon la présente invention.

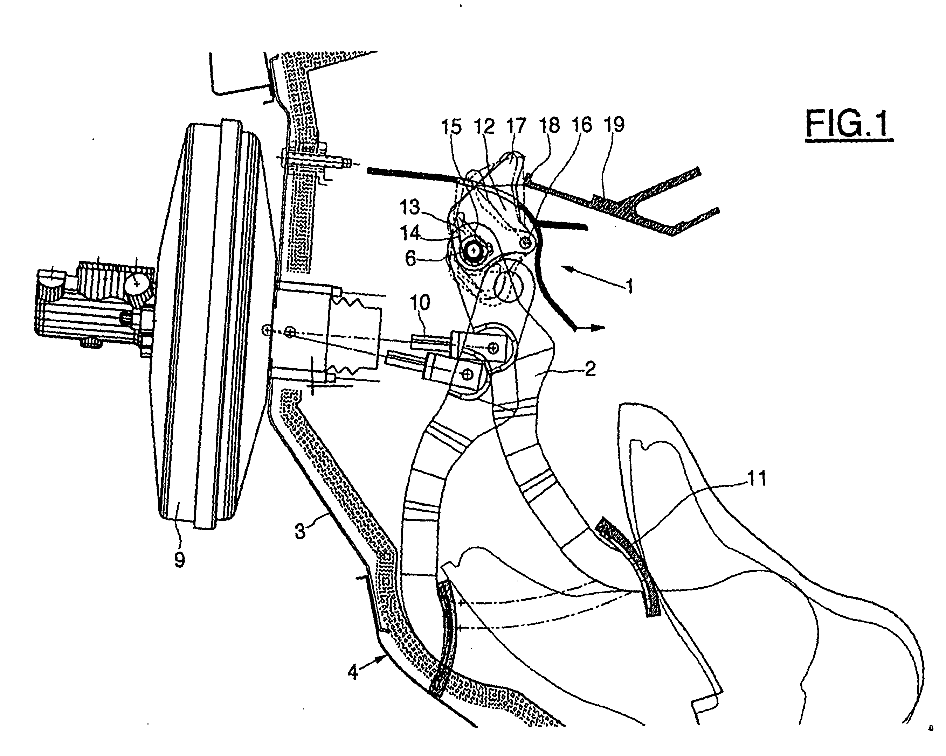

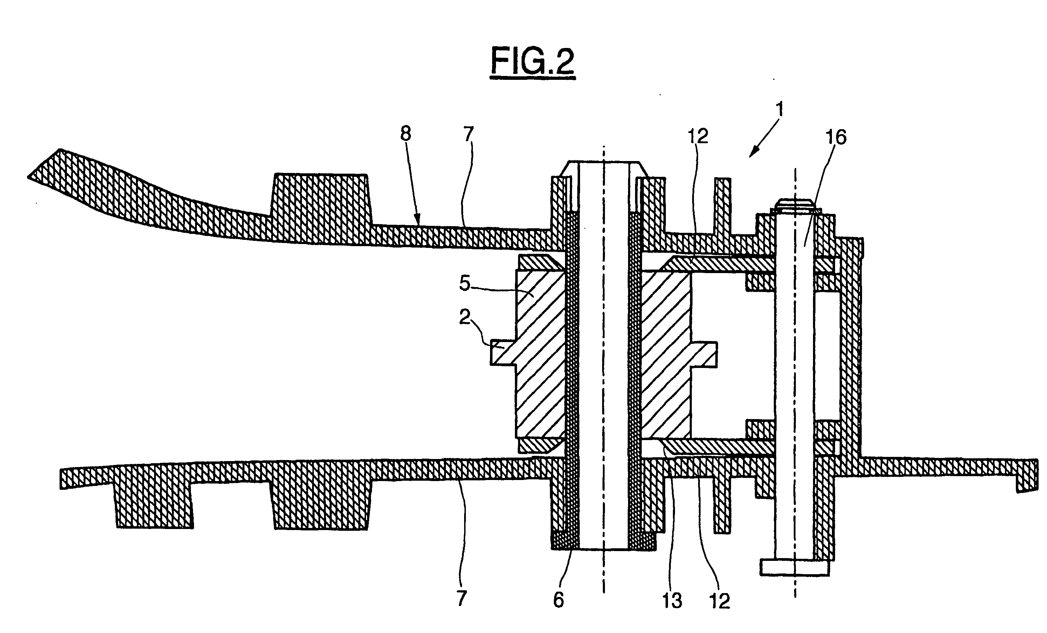

En se reportant aux figures 1 et 2, on voit qu'on a représenté un dispositif de montage 1 d'une pédale de frein 2, située en avant du tablier avant 3 de l'habitacle d'un véhicule automobile 4.

Comme on le voit plus précisément sur la figure 2, la partie supérieure de la pédale 2 comprend un moyeu 5 qui est traversé par un axe transversal principal 6 en une matière tendre telle qu'une matière plastique dont les extrémités sont portées par des flasques longitudinaux parallèles 7 d'un support 8 qui s'étend vers l'avant à partir du tablier 3 et qui est fixé à ce dernier de façon connue.

En se reportant à la figure 1, on voit qu'à faible distance de l'axe principal 6, la pédale 2 est reliée à un organe de freinage 9 à commander, par l'intermédiaire d'un levier articulé 10.

De façon classique, l'extrémité inférieure de la pédale 2 porte un patin 11 sur lequel le chauffeur du véhicule peut agir avec son pied en appuyant vers l'avant.

Comme on le voit sur les figures 1 et 2, le dispositif 1 comprend deux couteaux 12 en forme de plaques, qui s'étendent radialement à l'axe principal 6, entre les extrémités du moyeu 5 et les flasques 7, et qui présentent des évidements 13 au travers desquels s'étend l'axe 6.

Les évidements 13 présentent des bords tranchants et comprennent des côtés opposés 14 et 15 déterminant des branches coupantes en forme de V, leurs parties les plus larges étant en bas.

Les couteaux 12 sont en outre reliés aux flasques 7 du support 8 grâce à un axe transversal secondaire 16 situé en arrière de l'axe principal 6.

Par ailleurs, les couteaux 12 présentent des parties 17 qui s'étendent vers le haut à l'extérieur du support 8, en avant d'une zone d'appui 18 d'une partie fixe 19 du véhicule, constituée par exemple par le support de la colonne de direction.

En position normale de fonctionnement, la pédale 2 peut pivoter autour de l'axe principal 6, cet axe principal étant dans la partie la plus large des évidements 13 des couteaux 12.

En cas de choc frontal ou orienté vers l'arrière du véhicule 4 contre un obstacle, le tablier 3 se déplace vers l'arrière et entraîne avec lui en arrière le support 8 de la pédale 2.

Ce faisant, le support fixe 19, qui normalement ne se déplace pas vers l'arrière ou plus tard au cours du choc ou beaucoup moins que le support 8, constitue par sa zone d'appui 18 une butée contre laquelle viennent en appui les parties supérieures 17 des couteaux 12, ce qui provoque une rotation des couteaux 12 autour de l'axe secondaire 16.

Lors de cette rotation, l'axe principal 6 se déplace dans les évidements 13 des couteaux 12, en direction de leurs extrémités les plus petites, en glissant sur les branches coupantes 14 et 15. Ces branches 14 et 15 provoquent alors un cisaillage au moins partiel de l'axe 6 provoquant son affaiblissement ou sa coupure de part et d'autre du moyeu 5 de la pédale 2, la coupure totale de l'axe 8 étant de toute façon obtenue sous l'effet de l'effort exercé par le chauffeur sur le patin 11 de la pédale 2.

Ainsi, au cours du choc déformant le véhicule, l'effort que le chauffeur exerce sur la pédale 2 se trouve réduit et la pédale 2 peut s'enfoncer jusqu'au tablier 3.

Le dispositif de montage 1 qui vient d'être décrit permet donc de transmettre normalement les efforts de commande par la pédale 2 en fonctionnement normal et en outre de libérer la pédale 2 pour au moins partiellement soulager les efforts du pied sur la pédale 2 en cas de choc, garantissant ainsi une certaine protection du chauffeur contre des lésions physiologiques, notamment de ses chevilles.

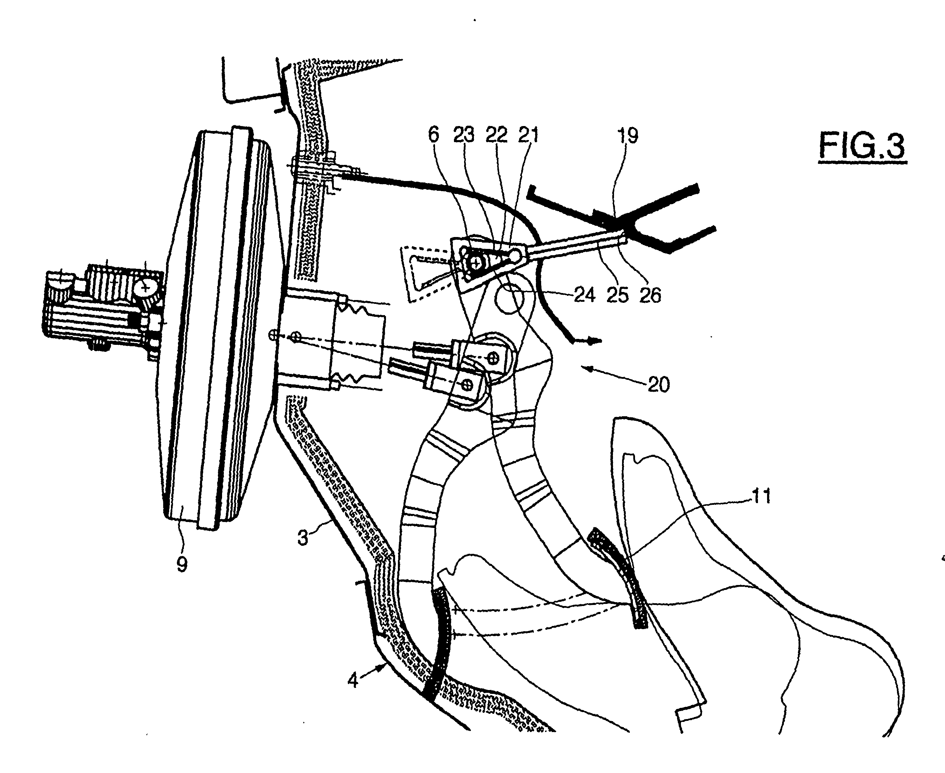

En se reportant à la figure 3, on voit qu'on a représenté un second dispositif de montage 20 qui ne se différencie du dispositif de montage 1 que par le fait que ses couteaux 21 en forme de plaques présentent des évidements 22 à deux bords opposés tranchants 23 et 24, dont la partie la plus large est située vers l'avant. Ces couteaux 21 présentent des prolongements 25 qui s'étendent vers l'arrière et dont les extrémités arrière sont en butée sur une surface 24 de la partie fixe 19 du véhicule 4. L'axe principal 6 traverse la partie avant la plus large des évidements 22 des couteaux 21.

Comme dans l'exemple décrit précédemment en référence aux figures 1 et 2, lors d'un choc frontal ou orienté vers l'arrière, les couteaux 21 restent sensiblement immobiles, en appui contre la surface 24 de la partie fixe 19 du véhicule et l'axe transversal 6, entraîné par le déplacement vers l'arrière du support 8 et du tablier 3, se déplace vers l'arrière entre les branches tranchantes 23 et 24 pour y être au moins partiellement cisaillé de part et d'autre du moyeu 5 de la pédale 2 afin de libérer cette dernière.

## Revendications

1. Dispositif de montage d'une pédale, en particulier d'une pédale de frein (2), d'un véhicule automobile, comprenant un support (8) sur lequel est montée la pédale par l'intermédiaire d'un axe principal (6) de rotation, **caractérisé par le fait qu'**il comprend des moyens de cisaillage (12) reliés à une partie fixe (19) du véhicule et permettant de cisailler radialement ledit axe principal (6) en cas de déplacement dudit support (8) par rapport à ladite partie fixe de façon à libérer la pédale (2) dudit support.

2. Dispositif selon la revendication 1, **caractérisé par le fait que** ledit axe principal (6) est porté par ledit support (8) de part de d'autre d'un moyeu (5) de la pédale (2), des moyens de cisaillage (12) étant prévus de part et d'autre de ce moyeu.

3. Dispositif selon l'une des revendications 1 et 2, **caractérisé par le fait que** lesdits moyens de cisaillage comprennent au moins un couteau (12) et des moyens (18) pour déplacer ce couteau par rapport audit axe principal (6) pour cisailler ce dernier en cas de déplacement dudit support par rapport à ladite partie fixe.

4. Dispositif selon l'une quelconque des revendications précédentes, **caractérisé par le fait que** ledit couteau comprend deux branches coupantes (14, 15) en forme de V, ledit axe principal (6) étant disposé entre les branches de ce couteau.

5. Dispositif selon l'une des revendications 3 et 4, **caractérisé par le fait que** ledit couteau (12) comprend une partie (17) butant contre ladite partie fixe (19), en cas de déplacement dudit support (8) par rapport à ladite partie fixe (19).

6. Dispositif selon l'une quelconque des revendications 3 à 5, **caractérisé par le fait que** ledit couteau (12) est porté par ledit support (8) par l'intermédiaire d'un axe secondaire (16), ledit couteau (12) présentant une partie (17) venant en appui sur ladite partie fixe, de telle sorte que ledit couteau peut tourner autour dudit axe secondaire (16) en prenant appui sur ladite partie fixe de manière à cisailler radialement ledit axe principal (6) en cas de déplacement dudit support (8) par rapport à ladite partie fixe (19).

## Patentansprüche

1. Vorrichtung zur Montage eines Pedals, insbesondere eines Bremspedals (2) eines Kraftfahrzeugs, welche einen Träger (8) umfasst, an welchem das Pedal über eine Haupt-Drehachse (6) montiert ist, **dadurch gekennzeichnet, dass** sie Abschneidemittel (12) umfasst, welche mit einem festen Teil (19) des Fahrzeuges verbunden sind und welche es erlauben, radial die Haupt-Achse (6) im Falle einer Verschiebung des Trägers (8) im Verhältnis zum festen Teil auf eine Weise abzuschneiden, um das Pedal (2) vom Träger freizugeben.

2. Vorrichtung nach Anspruch 1, **dadurch gekennzeichnet, dass** die Haupt-Achse (6) durch den Träger (8) auf beiden Seiten einer Nabe (5) des Pedals (2) getragen wird, wobei Abschneidemittel (12) auf beiden Seiten dieser Nabe vorgesehen sind.

3. Vorrichtung nach einem der Ansprüche 1 und 2, **dadurch gekennzeichnet, dass** die Abschneidemittel mindestens ein Messer (12) und Mittel (18) zum Verschieben dieses Messers im Verhältnis zur Haupt-Achse (6) umfassen, um diese letztere im Falle einer Verschiebung des Trägers im Verhältnis zum festen Teil abzuschneiden.

4. Vorrichtung nach irgendeinem der vorangegangenen Ansprüche, **dadurch gekennzeichnet, dass** das Messer zwei scharfe Äste (14, 15) in Form eines V umfasst, wobei die Haupt-Achse (6) zwischen den Ästen dieses Messers angeordnet ist.

5. Vorrichtung nach einem der Ansprüche 3 und 4, **dadurch gekennzeichnet, dass** das Messer (12) einen Teil (17) umfasst, welcher gegen den festen Teil (19) im Falle einer Verschiebung des Trägers (8) im Verhältnis zu dem festen Teil (19) anstößt.

6. Vorrichtung nach irgendeinem der Ansprüche 3 bis 5, **dadurch gekennzeichnet, dass** das Messer (12) durch den Träger (8) über eine sekundäre Achse (16) getragen wird, wobei das Messer (12) einen Teil (17) aufweist, welcher auf dem festen Teil derart in Anlage kommt, dass das Messer um die sekundäre Achse (16) drehen kann, unter einem Anliegen auf dem festen Teil in einer Weise, um radial die Haupt-Achse (6) im Falle einer Verschiebung des Trägers (8) im Verhältnis zum festen Teil (19) abzuschneiden.

## Claims

1. An arrangement for mounting a pedal, in particular a brake pedal (2), of a motor vehicle, comprising a support (8) to which the pedal is mounted by way of a main rotary shaft (6), **characterised in that** it comprises shearing means (12) connected to a fixed portion (19) of the vehicle and permitting said main shaft (6) to be sheared radially in the event of displacement of said support (8) with respect to said fixed portion so as to free the pedal (2) from said support.

2. An arrangement according to claim 1 **characterised in that** the main shaft (6) is carried by said support (8) on respective sides of a hub (5) of the pedal (2), shearing means (12) being provided on respective sides of said hub.

3. An arrangement according to one of claims 1 and 2 **characterised in that** said shearing means comprise at least one blade (12) and means (18) for displacing said blade with respect to said main shaft (6) to shear the latter in the event of displacement of said support with respect to said fixed portion.

4. An arrangement according to any one of the preceding claims **characterised in that** said blade comprises two cutting arms (14, 15) in a V shape, said main shaft (6) being disposed between the arms of said blade.

5. An arrangement according to one of claims 3 and 4 **characterised in that** said blade (12) comprises a portion (17) butting against said fixed portion (19), in the event of displacement of said support (8) with respect to said fixed portion (19).

6. An arrangement according to any one of claims 3 to 5 **characterised in that** said blade (12) is carried by said support (8) by way of a secondary shaft (16), said blade (12) having a portion (17) which comes to bear against said fixed portion in such a way that said blade can turn about said secondary shaft (16) by bearing against said fixed portion in such a way as to radially shear said main shaft (6) in the event of displacement of said support (8) with respect to said fixed portion (19).
